(19) Europäisches Patentamt / European Patent Office / Office européen des brevets

(11) **EP 2 877 819 B1**

(12) **FASCICULE DE BREVET EUROPEEN**

(45) Date de publication et mention de la délivrance du brevet:
**01.03.2017 Bulletin 2017/09**

(21) Numéro de dépôt: **13735018.7**

(22) Date de dépôt: **09.07.2013**

(51) Int Cl.:
*G01F 23/22* (2006.01)      *G01F 23/14* (2006.01)
*C21B 7/24* (2006.01)      *C21C 5/46* (2006.01)
*G01F 23/24* (2006.01)      *C21C 5/52* (2006.01)
*F27D 21/00* (2006.01)      *F27B 1/28* (2006.01)

(86) Numéro de dépôt international:
**PCT/EP2013/064482**

(87) Numéro de publication internationale:
**WO 2014/009367 (16.01.2014 Gazette 2014/03)**

(54) **PROCÉDÉ ET DISPOSITIF DE MESURE DES NIVEAUX DE FONTE ET DE LAITIER DANS UN HAUT-FOURNEAU**

VERFAHREN UND VORRICHTUNG ZUR MESSUNG DES GEHALTES AN GUSSEISEN UND SCHLACKE IN EINEM HOCHOFEN

METHOD AND DEVICE FOR MEASURING LEVELS OF CAST-IRON AND SLAG IN A BLAST FURNACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 BE 201200493**

(43) Date de publication de la demande:
**03.06.2015 Bulletin 2015/23**

(73) Titulaire: **Centre de Recherches Métallurgiques asbl -**
**Centrum voor Research in de Metallurgie vzw**
**1000 Bruxelles (BE)**

(72) Inventeurs:
• **OJEDA ARROYO, Claudio**
  **B-4030 Liege (BE)**
• **DURIEU, Frédéric**
  **B-4670 Blegny (BE)**
• **ESSER, Eric**
  **B-4537 Verlaine (BE)**

(74) Mandataire: **Pronovem**
**Office Van Malderen**
**Parc d'affaires Zénobe Gramme- bâtiment K**
**Square des Conduites d'Eau 1-2**
**4020 Liège (BE)**

(56) Documents cités:
EP-A1- 2 422 900      WO-A1-2011/038875
DE-A1- 3 436 331      JP-A- 54 130 958
JP-A- 60 110 821      US-A- 5 493 903
US-A1- 2002 134 794

**Description**

<u>Objet de l'invention</u>

La présente invention concerne un procédé pour mesurer avec précision le niveau de métal liquide ainsi que le niveau de scories ou laitier flottant à la surface de celui-ci à l'intérieur du creuset d'un four métallurgique à cuve, en particulier le niveau de fonte et le niveau de laitier dans un haut-fourneau. Particulièrement, le procédé consiste à utiliser un ou plusieurs capteurs à jauges de contrainte fixés sur la paroi externe du haut-fourneau.
L'invention se rapporte également à un capteur spécifique à jauges de contrainte utilisé dans le procédé.

<u>Etat de la technique</u>

Il est connu qu'un haut-fourneau est un four de conversion carbothermique, destiné à la fabrication de la fonte à partir du minerai de fer. Pour ce faire, minerai de fer et coke solides sont enfournés par le haut du four dans une section appelée gueulard. De l'air chaud (1200 °C) insufflé à la base du four provoque la combustion du coke. Le carbone provenant du coke est ainsi oxydé. Cet oxyde de carbone va réduire les oxydes de fer et, de ce fait, isoler le fer métallique. Celui-ci se charge cependant en carbone au fur et à mesure de sa descente dans le haut-fourneau et se transforme ainsi en fonte. À la sortie d'un haut-fourneau, on récupère à l'état liquide, outre la fonte, les scories, appelées, en l'espèce, laitier, constituées de la gangue terreuse du minerai, de cendres et de fondants. Leur densité inférieure à celle de la fonte (env. 3000 kg/m$^3$ et 7000 kg/m$^3$ respectivement) les fait flotter au-dessus de la fonte. Ces résidus sont donc considérés comme des coproduits qui doivent être séparées de la fonte après son écoulement par le trou de coulée.
Pour améliorer la gestion du haut-fourneau et les opérations liées à la coulée, il est nécessaire de connaître en permanence le niveau de la fonte et celui du laitier.
Afin de mesurer le niveau de la surface de la fonte qui se trouve sous une couche de laitier liquide, il est connu d'exploiter la différence de conductibilité électrique entre la fonte et le laitier. Le brevet US 4,413,810 exploite ce principe en utilisant une sonde de mesure immergée dans le bain de métal. Cependant, un tel dispositif ne permet pas de fournir une indication fiable de l'épaisseur de la couche de laitier en raison de la température élevée du métal en fusion (supérieure à 1000 °C) pouvant interférer avec la lecture.
Le document JP-11281467 exploite la différence de densité entre la fonte et le laitier pour mesurer le niveau de leur interface. Le dispositif de mesure comporte un poids ayant une densité apparente inférieure à celle de la fonte. Le poids est relié par une suspension à des poulies et à un dispositif d'enroulement. Les poulies sont reliées à des éléments élastiques dont le déplacement permet de mesurer la longueur du poids en suspension et donc de mesurer le niveau de surface de la fonte. Cependant, cette technologie ne permet pas de mesurer le niveau de surface du laitier.
Le document JP 2003-344142 propose une solution à ce problème. Ce document décrit un procédé et un appareil pour mesurer avec précision le niveau de fonte et l'épaisseur de la couche de laitier, même dans le cas où la couche de laitier varie. Le procédé utilise des micro-ondes incidentes à la surface de la fonte sur laquelle flotte le laitier. L'intensité des ondes réfléchies est enregistrée en fonction du temps. On observe successivement un pic A de réflexion maximale suivi dans le temps par un pic B de moindre intensité. Le niveau de surface de la fonte est déterminé en mesurant la distance de déplacement des micro-ondes pendant la durée comprise entre l'instant d'émission des ondes et l'instant du pic B. L'épaisseur de la couche de laitier est quant à elle déterminée en mesurant la distance de déplacement des micro-ondes pendant la durée comprise entre l'instant du pic A et l'instant du pic B.
La température de plus de 1000 °C régnant à l'intérieur du creuset est ainsi un obstacle majeur au développement de méthodes de mesure précise de niveaux de liquide.
Dans cet ordre d'idées, le document JP06-271916 propose d'utiliser un dispositif de mesure se trouvant à l'extérieur du creuset. Ce document décrit un procédé pour mesurer le niveau supérieur de la couche de laitier grâce à l'utilisation d'ondes de choc. Des détecteurs d'ondes de choc sont disposés à différentes positions verticales à l'extérieur du haut-fourneau. Une onde de choc est émise en direction de l'intérieur du creuset et l'intensité de l'onde réfléchie est détectée par les détecteurs d'ondes. Le niveau supérieur du laitier est mesuré quand l'intensité de l'onde réfléchie change à hauteur d'un des détecteurs. Cependant, cette technologie ne permet pas de mesurer le niveau de l'interface fonte-laitier dont la connaissance précise est indispensable pour séparer la fonte du laitier.
Le document WO 2011/038875 divulgue un moule pour la transformation de métal en fusion, comportant une paroi dans laquelle est disposé au moins un capteur pour détecter la température et/ou la dilatation d'au moins une partie du moule.
Afin de permettre une surveillance efficace et rentable du moule, le capteur comprend au moins un guide d'onde optique, qui est disposé dans une rainure pratiquée dans la paroi du moule.
Le guide d'ondes optique est en appui contre le fond de la rainure et l'espace de la rainure non rempli par le guide d'onde optique est au moins en grande partie obturé par une matière de remplissage. Ce dispositif ne pourrait être utilisé dans un haut-fourneau car il y est exclu de pratiquer une rainure dans la paroi sous peine d'affaiblir le blindage du creuset.

Le document JP 60 110 821 décrit une installation comprenant plusieurs fours (fusion, séparation de laitier, etc.) pour la production de cuivre brut. Cette installation est contrôlée grâce à une série de thermomètres et jauges de déformation associés à chaque four.

Le document JP 54 130958 décrit une cuve de métal liquide dans la paroi de laquelle sont disposés selon une direction verticale des capteurs de pression tels que des jauges de déformation, qui sont connectés à un calculateur. Les différences de pression entre les capteurs de pression adjacents pris deux à deux sont calculées et comparées dans un circuit logique à plusieurs valeurs prédéterminées, ce qui permet de localiser le niveau de liquide entre deux détecteurs adjacents. Cette mesure possède une certaine imprécision et ne permet pas de mesurer le niveau de laitier éventuel. Cette méthode ne peut être appliquée à la paroi épaisse d'un haut-fourneau car la déformation affecte alors toutes les jauges.

Le document US 2002/0134794 décrit un récipient cylindrique destiné à contenir un fluide sous pression et comportant un système de contrôle de pression muni d'un capteur de déformation disposé sur la face externe du récipient, en vue de générer une réponse caractéristique de la pression corrélée à la pression du fluide dans le récipient. La réponse caractéristique de la pression est reliée à la déformation dans la paroi du récipient causée par la pression du fluide en utilisant des équations qui déterminent quantitativement la tension axiale et la tension radiale (tension bi-axiale) pour des valeurs données de la pression interne et de paramètres liées aux dimensions du cylindre (rayon moyen, épaisseur de la paroi) et aux propriétés des matériaux utilisés. L'application de ces tensions cause des déformations respectivement axiale et radiale dans le matériau élastique, qui peuvent être calculées selon la loi de Hooke. Le document EP 2 422 900 décrit un agencement pour mesurer les paramètres physiques dans des lingotières de coulée en continu dans des installations automatisées coulant des fontes de métal en brins. Des capteurs à onde acoustique de surface (SAW) passifs interrogeables sans fils sont utilisés pour contrôler lesdits paramètres physiques.

## Buts de l'invention

L'invention vise à fournir un procédé pour une application non encore décrite dans l'état de la technique et ne présentant pas les inconvénients de celui-ci.

En particulier, l'invention a pour but de fournir un procédé permettant de mesurer avec précision le niveau de surface de la fonte et celui de laitier grâce à un ou plusieurs capteurs à jauges de contrainte se trouvant à l'extérieur du haut-fourneau.

## Principaux éléments caractéristiques de l'invention

Un premier aspect de la présente invention se rapporte à un procédé de mesure du niveau de surface de métal liquide et du niveau de surface de laitier dans le creuset d'un four à cuve métallurgique possédant une paroi externe munie d'un blindage en acier, ainsi qu'un trou de coulée, le blindage de la paroi externe entourant une épaisseur de réfractaire en contact avec le métal liquide, le blindage étant muni sur sa face externe de plusieurs capteurs à jauges de déformation et d'un ou plusieurs capteurs thermiques, lesdits capteurs étant montés alignés dans un plan vertical, de part et d'autre du trou de coulée et tels que les deux types de capteurs sont alternés dans ce plan vertical, ledit procédé comprenant les étapes suivantes:

- mesurer en un ou plusieurs points de la paroi externe du creuset les variables suivantes :

    - la déformation circonférentielle de ladite paroi externe au moyen des capteurs à jauges de déformation fixés sur ledit blindage ;
    - la température de ladite paroi externe au moyen des capteurs thermiques fixés sur ledit blindage ;

- optionnellement mesurer la pression circulaire ou pression statique du vent chaud dans le four ;
- introduire lesdites variables mesurées en plusieurs points de la paroi externe du creuset dans l'équation générale gouvernant la déformation circonférentielle continue dont la solution est analytique, qui admet deux inconnues, le niveau de métal liquide et le niveau global métal liquide-laitier, compte tenu des paramètres fixes suivants : la géométrie du four à cuve, les paramètres représentatifs de la nature des matériaux constitutifs du four à cuve, l'épaisseur de la paroi externe du four à cuve en chaque point de mesure, la densité du métal liquide et du laitier ; et
- résoudre ladite équation et obtenir le niveau de surface de métal liquide et le niveau de surface de laitier dans le creuset.

Certains fours métallurgiques à cuve comme le four électrique ou le convertisseur ne sont pas en surpression, ce qui rend inutile une mesure de pression.

Un deuxième aspect de l'invention se rapporte à une paroi externe du creuset d'un four à cuve métallurgique, comportant un blindage et munie d'un dispositif de mesure du niveau de surface de métal liquide et du niveau de surface de laitier dans le creuset du four, caractérisée en ce que ledit dispositif comporte plusieurs capteurs à jauges de déformation et un ou plusieurs capteurs thermiques, fixés sur ledit blindage, en ce que les capteurs sont montés alignés dans un plan vertical et en ce que les deux types de capteurs sont alternés dans le plan vertical.

Un troisième aspect de l'invention se rapporte à un haut-fourneau comprenant un creuset muni d'une paroi externe, ladite paroi externe comportant un blindage muni d'un dispositif de mesure du niveau de surface de fonte et du niveau de surface de laitier dans le creuset, comme décrit ci-dessus.

Selon des modes d'exécution préférés, l'invention sera en outre limitée par une ou une combinaison appropriée des caractéristiques suivantes :

- l'équation générale gouvernant la déformation circonférentielle continue de la paroi externe est, dans le cas d'un haut-fourneau :

$$y = y_0 F_1 + \frac{\Psi}{2\lambda} F_2 + LT \qquad (1)$$

où $F_1$ et $F_2$ sont des constantes pour un haut-fourneau donné à chaque hauteur de mesure :

$$F_1 = \cosh(\lambda x)\cos(\lambda x) \qquad (2)$$

$$F_2 = \cosh(\lambda x)\sin(\lambda x) + \sinh(\lambda x)\cos(\lambda x) \qquad (3)$$

et

$$\lambda = \left[\frac{3(1-v^2)}{R^2 t^2}\right]^{1/4} \qquad (4)$$

où y est la déflexion (ou le déplacement) horizontale mesurée et corrigée en fonction de la température mesurée, x est la position verticale, R est le rayon moyen à chaque hauteur, t est l'épaisseur de paroi à chaque hauteur et $v$ est le coefficient de Poisson ;
les autres termes dépendant de la pression appliquée sur la paroi du four à cuve :

- $\gamma_0$ est la déflexion ou le déplacement au niveau des tuyères ;
- $\psi$ est l'angle de la paroi déformée au niveau des tuyères ;
- LT est le terme de charge qui est proportionnel à la force appliquée sur la structure ;

une transformation finale sur les pressions P étant réalisée pour prendre en compte le fait que le creuset du haut-fourneau est construit avec des matériaux de propriétés mécaniques différentes, réfractaire et enveloppe d'acier, et avec des épaisseurs différentes en fonction de la hauteur ($E_x$ = module de Young du matériau x) :

$$P_{sur\ enveloppe\ acier} =$$

$$P_{int.sur\ réfractaire} \frac{E_{acier}Epaisseur_{Env.acier}}{E_{acier}Epaisseur_{Env.acier} + E_{réfract.}Epaisseur_{réfract.}} \quad (5) \quad ;$$

la relation entre la pression statique P et le niveau de métal liquide ou de laitier h étant donnée par une relation du type P=p.g.h, où $\rho$ est la densité moyenne et g l'accélération de la pesanteur ;
- les mesures de déformation circonférentielle et de température sont effectuées en continu et/ou en temps réel ;
- les jauges de déformation sont au moins partiellement soudées à même ledit blindage ;
- le capteur à jauges de déformation comporte un capot de protection fixé mécaniquement sur le blindage dont l'étanchéité par rapport au blindage est assurée au moyen d'un joint élastique ;

- le capteur à jauges de déformation comporte quatre jauges de déformation, dont deux jauges ne sont pas fixées entièrement au blindage ;
- chaque capteur thermique est un thermomètre à résistance de platine ;
- le dispositif de mesure est disposé entre les canaux d'un circuit de refroidissement à canaux monté sur ou dans la paroi.

L'invention n'est pas limitée à une utilisation dans un haut-fourneau mais pourrait être mise en oeuvre sur tout type de four ou de cuve métallurgique contenant du métal liquide (four électrique, convertisseur, etc.).

## Brève description des figures

La figure 1 est une représentation schématique de la section verticale du creuset d'un haut-fourneau.

Les figures 2 et 3 sont des vues en élévation de deux variantes du blindage extérieur en acier du creuset d'un haut-fourneau munies du dispositif de mesure selon l'invention et se différenciant par leur système de refroidissement.

La figure 4 est une représentation graphique de la mesure du niveau de surface de fonte ainsi que du niveau de surface du laitier au cours du temps, obtenue selon le procédé de l'invention.

La figure 5 est une vue détaillée d'un capteur à jauges de déformation soudées sur le blindage en acier du creuset d'un haut fourneau, selon la présente invention.

## Description de formes d'exécution préférées de l'invention

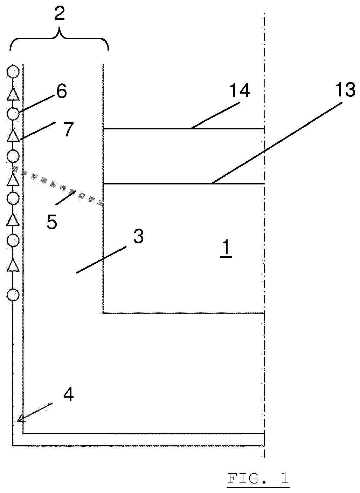

La figure 1 est une représentation schématique de la section verticale de la paroi 2 du creuset 1 d'un haut fourneau. La paroi est constituée de réfractaires 3 et d'un blindage 4 en acier. Selon une forme d'exécution préférée du dispositif de l'invention, le blindage en acier de la paroi externe est équipé de capteurs à jauges de déformation 6 représentés par des cercles alternant avec des capteurs thermiques 7 représentés par des triangles. La figure 1 montre un exemple non limitatif avec six capteurs à jauges de déformation 6 et cinq capteurs thermiques 7 fixés sur la face externe du blindage 4 en acier. Le positionnement du trou de coulée 5 est également indiqué.

Aux températures élevées régnant à l'intérieur du creuset 1, les réfractaires 3 peuvent se ramollir et/ou être sujets à l'érosion et la corrosion. Sans un système de refroidissement, leur durée de vie serait courte. Le refroidissement est réalisé en faisant circuler de l'eau à travers des plaques et tuyaux encastrés dans les parois du haut fourneau. Le creuset 1 d'un haut fourneau peut être refroidi soit par de l'eau s'écoulant à travers les plaques de refroidissement à l'intérieur de la paroi du creuset, soit par de l'eau s'écoulant à l'air libre le long de la paroi extérieure.

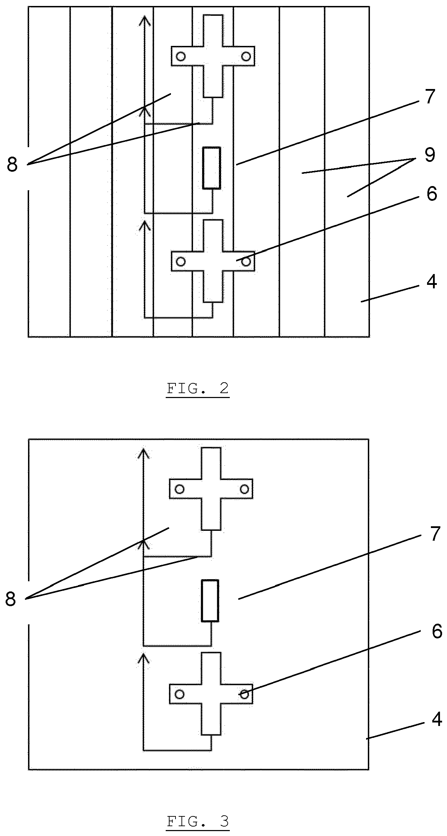

Dans la figure 2, un système de refroidissement basé sur l'utilisation de canaux à eau est utilisé, les canaux 9 étant schématiquement représentés par des lignes verticales.

Dans la figure 3, le refroidissement s'opère par de l'eau s'écoulant à l'air libre le long de la paroi extérieure.

Dans les figures 2 et 3, le blindage 4 en acier de la paroi 2 externe du creuset 1 est équipé selon le dispositif de l'invention, à titre illustratif, de deux capteurs à jauges de déformation 6 représentés par des montages en « croix » et d'un capteur thermique 7 représenté par un rectangle. Les flèches représentent le câblage 8 des capteurs vers un dispositif d'enregistrement et de sauvegarde de données.

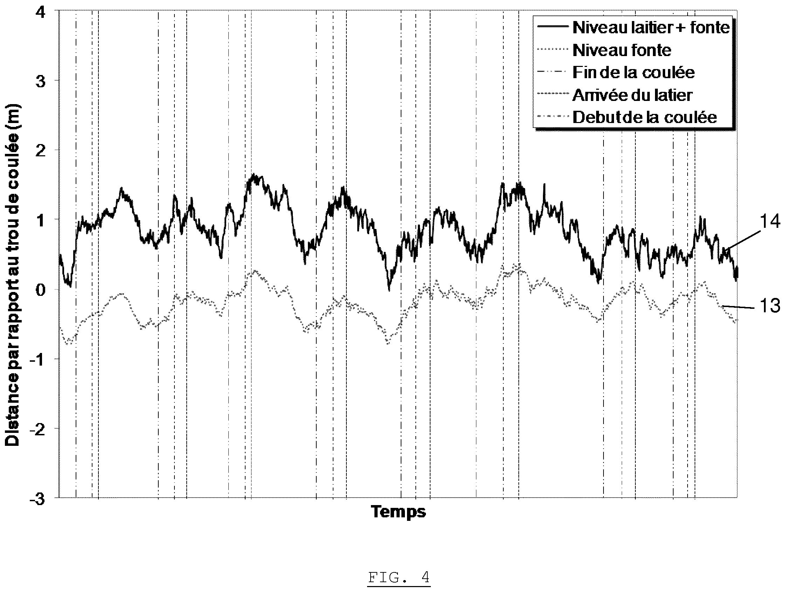

La figure 4 est une représentation graphique de la mesure, selon l'invention, du niveau de surface de laitier 14 (courbe supérieure indiquant le niveau cumulé de fonte et de laitier) ainsi que du niveau de fonte 13 (courbe inférieure) en fonction du temps, la distance de ces niveaux étant mesurée par rapport au trou de coulée 5.

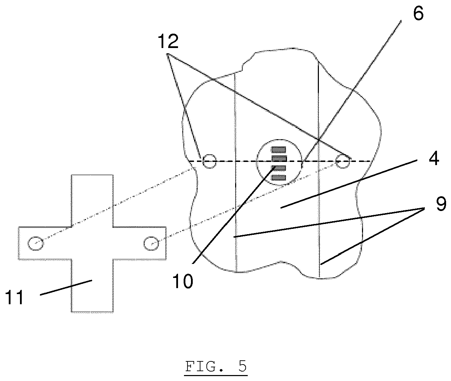

La figure 5 est une vue détaillée d'un capteur à jauges de déformation ou de contrainte (*strain gauge*) 6 fixé sur le blindage 4 en acier de la paroi 2 externe du creuset 1. Le capteur comporte quatre jauges individuelles de mesure 10 représentées par des rectangles. De préférence, deux jauges sont soudées complètement sur le blindage 4, tandis que les deux autres jauges ne sont pas soudées complètement à la paroi de manière à permettre une correction de température (dilatation thermique des jauges). Le capteur comporte un capot 11 fixé à l'aide d'un système de vis et de boulons 12 sur le blindage 4. Les canaux 9 du système de refroidissement sont représentés par des lignes verticales. L'étanchéité du capot 11 par rapport au blindage est assurée au moyen d'un joint élastique, par exemple en silicone (non représenté). La forme en croix du capteur sur les figures résulte d'une forme de capot 11 sensiblement verticale et d'une traverse sensiblement horizontale pour fixer le capot au blindage. Ainsi, ce sont les jauges qui sont rigidifiées sur le blindage et non le capot.

Le principe de la méthode est le suivant : la fonte et le laitier exercent une pression différentielle sur la paroi des réfractaires 3 à l'intérieur du creuset 1, pression qui sera transmise au blindage 4 de la paroi 2 externe en acier.

La variation de pression statique dans le haut-fourneau causée par la variation des niveaux de surface de fonte 13 et de laitier 14 va induire une variation de la déformation du blindage 4.

Les mesures directes de la déformation et la température du blindage, ainsi que la mesure de la pression circulaire (pression statique du « vent chaud », c'est-à-dire des gaz circulant dans le haut-fourneau) sont les données d'entrée d'un système d'équations dont la résolution analytique va donner les niveaux de surface de fonte 13 et de laitier 14 dans le creuset 1.

Le système d'équations tient compte des paramètres fixes suivantes :

- la géométrie du haut-fourneau,
- la nature des matériaux constitutifs du haut-fourneau (via le module de Young, le coefficient de Poisson, etc. de l'acier et du réfractaire),
- l'épaisseur de la paroi externe (en ce que compris le réfractaire) du haut-fourneau en chaque point de mesure,
- la densité de la fonte et du laitier.

On notera que les valeurs de température mesurées au niveau des capteurs thermiques installés sur la face externe du blindage permettent la correction en température des déformations mesurées selon l'équation suivants :

$$\text{Déformation corrigée = Déformation mesurée} - \alpha.\Delta T,$$

où $\alpha$ est le coefficient de dilatation thermique et $\Delta T$ est la différence entre la température mesurée et la température de référence.

Les résultats de calcul avec plusieurs points de mesure sont donnés à la figure 4 (trait continu : niveau global laitier et fonte ; trait pointillé : niveau de fonte). La figure 4 montre également les différentes étapes d'une coulée : débouchage du trou de coulée (début de coulée), écoulement de fonte, le laitier pouvant encore s'accumuler, écoulement de fonte et laitier (arrivée laitier), atteinte de niveaux bas et sortie de gaz, rebouchage du trou de coulée (fin de coulée).

Les mesures de déformation circonférentielle et de température sont de préférence effectuées en continu et/ou en temps réel.

Dans la variante où il n'y a qu'un seul point de mesure de déformation, celui-ci doit être à proximité du niveau du trou de coulée (par exemple à un mètre) et ne permet que de calculer le niveau global de fonte et de laitier. Dans ce cas, le niveau global est obtenu à partir de la valeur de pression statique au trou de coulée. Cette dernière est obtenue comme inconnue à partir d'une équation où la mesure donnée par la jauge de déformation est fonction de la pression statique, de la pression circulaire, de la géométrie du creuset (rayon), de l'épaisseur des parois (acier, réfractaire) et des modules de Young respectifs (acier, réfractaire). Pour obtenir le niveau en fonction de la pression statique, on adopte une valeur de densité de 3300 kg/m$^3$, qui est une valeur intermédiaire entre la densité de la fonte et celle du laitier pur. Le signal des jauges de contrainte est filtré pour éliminer les fluctuations à moyen terme liées aux changements de température. On obtient une bonne corrélation avec les résultats des modèles numériques.

Dans la deuxième variante, il y a plusieurs capteurs à jauges de contrainte disposés sur une génératrice du four, de part et d'autre du trou de coulée, en hauteur. On simplifie le problème en utilisant la méthode de superposition. Trois hypothèses sont formulées : la loi de Hooke est valide pour tous les matériaux impliqués, les déformations sont petites en comparaison de la taille de la structure et la déflexion n'altère pas l'action des forces appliquées. Les forces agissant sur le four sont les suivantes :

- pression des gaz agissant sur la surface interne ;
- pression statique agissant sur la paroi interne jusqu'à l'interface laitier-métal liquide ;
- pression statique de l'interface laitier-métal liquide sur la sole ;
- contrainte sur le fond ;
- contrainte au niveau des tuyères.

Les deux inconnues du problème sont à tout instant le niveau de métal liquide et le niveau global métal liquide-laitier. Le problème a une solution du fait de la présence de plusieurs capteurs sur une même génératrice.

L'équation générale gouvernant la déformation circonférentielle continue de la paroi externe (blindage) prend en compte la continuité du matériau et dépend de la déflexion aux tuyères, de l'angle de la paroi déformée aux tuyères et du terme de charge qui dépendent de la force appliquée à la structure. Les paramètres de l'équation sont des constantes qui dépendent du coefficient de Poisson et du module de Young des matériaux de la paroi (blindage en acier et réfractaires), de l'épaisseur de la paroi à chaque hauteur et du rayon moyen à chaque hauteur. Il est également tenu compte de l'épaisseur variable du réfractaire avec la hauteur (Références générales : Roark's Formulas for Strain and Stress ; *Strength of materials*, S. Timoshenko).

Plus précisément, l'équation générale gouvernant la déformation circonférentielle continue de la paroi externe est :

$$y = y_0 F_1 + \frac{\Psi}{2\lambda} F_2 + LT \qquad (1)$$

où $F_1$ et $F_2$ sont des constantes pour un haut-fourneau donné à chaque hauteur de mesure :

$$F_1 = \cosh(\lambda x)\cos(\lambda x) \qquad (2)$$

$$F_2 = \cosh(\lambda x)\sin(\lambda x) + \sinh(\lambda x)\cos(\lambda x) \qquad (3)$$

et

$$\lambda = \left[\frac{3(1-\nu^2)}{R^2 t^2}\right]^{1/4} \qquad (4)$$

où y est la déflexion ou le déplacement horizontal(e) mesuré (e), x est la position verticale, R est le rayon moyen à chaque hauteur, t est l'épaisseur de paroi à chaque hauteur et ν est le coefficient de Poisson.

Les autres termes dépendent de la pression appliquée sur la paroi du haut-fourneau :

- $\gamma_0$ est la déflexion ou le déplacement au niveau des tuyères ;
- $\psi$ est l'angle de la paroi déformée au niveau des tuyères ;
- LT est le terme de charge qui est proportionnel à la force appliquée sur la structure.

Une transformation finale est réalisée pour prendre en compte le fait que le creuset du haut-fourneau est construit avec des matériaux de propriétés mécaniques différentes (réfractaire et enveloppe d'acier) et avec des épaisseurs différentes en fonction de la hauteur ($E_x$ = module de Young du matériau x) :

$$P_{sur\ enveloppe\ acier} =$$

$$P_{int.sur\ réfractaire} \frac{E_{acier} Epaisseur_{Env.acier}}{E_{acier} Epaisseur_{Env.acier} + E_{réfract.} Epaisseur_{réfract.}} \qquad (5)$$

Enfin, la relation entre la pression statique P et le niveau de métal liquide ou de laitier h est donné par une relation du type P = ρ.g.h, où ρ est la densité moyenne et g l'accélération de la pesanteur.

Le rôle des jauges de déformation (ou de contrainte) est de traduire la déformation d'un corps d'épreuve (ici un corps sensiblement cylindrique) en variation de résistance électrique. Plus précisément, la variation de résistance électrique de la jauge est proportionnelle à sa déformation (piézorésistance). C'est le coefficient ou facteur de jauge k qui traduit cette proportionnalité, suivant la relation :

$$\Delta R/R = k.\Delta L/L,$$

où k est une constante qui dépend des matériaux considérés et de la température. Elle caractérise la sensibilité de la jauge.

Chaque jauge consiste en un ensemble de spires rapprochées de fil résistif, fabriqué à partir d'une mince feuille métallique collée sur un support souple et isolant, obtenu par photogravure suivant la technique utilisée pour les circuits imprimés.

La jauge de déformation peut être constituée de différents matériaux : aciers alliés, inoxydables, aluminium, semi-conducteurs, etc.

Les différents types de capteurs à jauges de contrainte et leur montage sont bien connus de l'homme de métier et ne sont pas limitatifs de la portée de la présente invention.

Les capteurs thermiques selon l'invention seront de préférence des thermomètres à résistance de platine, et de préférence encore des Pt100 (résistance de 100 ohms à 0 °C et 138,5 ohms à 100 °C)

Le dispositif de l'invention présente les avantages suivants. Son installation est simple et de faible coût. Le dispositif permet une installation et un éventuel remplacement aisés et rapides vu qu'il est placé sur la paroi externe du haut-fourneau, qui n'est pas portée à haute température.

Le système de mesure donne de bons résultats sur les creusets refroidis tant par gicleurs à l'air libre (*spray cooling*) que par circuits à canaux d'eau (*channel cooling*). Cependant, lors de la mise en oeuvre, pour le refroidissement à gicleurs, le refroidissement du secteur où les jauges sont installées doit être temporairement interrompu, d'où l'arrêt provisoire du haut-fourneau. Ce problème n'existe pas pour les hauts-fourneaux avec refroidissement du type « channel cooling », si l'on installe par exemple le dispositif de mesure dans l'espace entre deux canaux, et l'installation peut être faite durant la marche normale du haut-fourneau.

Les capteurs ne doivent pas nécessairement être équidistants sur une génératrice. Si la densité de capteurs est plus importante au voisinage du trou de coulée, on a une précision de calcul plus importante.

### Liste des symboles de référence

1. creuset de haut-fourneau
2. paroi du creuset
3. réfractaires
4. blindage en acier
5. trou de coulée
6. capteur à jauges de déformation
7. capteur thermique
8. câblage
9. canaux de refroidissement
10. jauge de déformation
11. capot
12. boulons
13. niveau de surface de fonte
14. niveau de surface de laitier

### Revendications

1. Procédé de mesure du niveau de surface de métal liquide (13) et du niveau de surface de laitier (14) dans le creuset (1) d'un four à cuve métallurgique possédant une paroi externe (2) muni d'un blindage en acier (4), ainsi qu'un trou de coulée, le blindage (4) de la paroi externe entourant une épaisseur de réfractaire (3) en contact avec le métal liquide, le blindage (4) étant muni sur sa face externe de plusieurs capteurs à jauges de déformation (6) et d'un ou plusieurs capteurs thermiques (7), lesdits capteurs (6, 7) étant montés alignés dans un plan vertical, de part et d'autre du trou de coulée et tels que les deux types de capteurs sont alternés dans ce plan vertical, ledit procédé comprenant les étapes suivantes:

   - mesurer en plusieurs points de la paroi externe (2) du creuset les variables suivantes :

     - la déformation circonférentielle de ladite paroi externe (2) au moyen des capteurs à jauges de déformation (6) fixés sur ledit blindage (4) ;
     - la température de ladite paroi externe (2) au moyen des capteurs thermiques (7) fixés sur ledit blindage (4) ;

   - optionnellement mesurer la pression circulaire ou pression statique du vent chaud dans le four ;
   - introduire lesdites variables mesurées en plusieurs points de la paroi externe du creuset dans l'équation générale gouvernant la déformation circonférentielle continue dont la solution est analytique, qui admet deux inconnues, le niveau de métal liquide et le niveau global métal liquide-laitier, compte tenu des paramètres fixes suivants : la géométrie du four à cuve, des paramètres représentatifs de la nature des matériaux constitutifs du four à cuve, l'épaisseur de la paroi externe du four à cuve en chaque point de mesure, la densité du métal liquide et du laitier ; et
   - résoudre ladite équation et obtenir le niveau de surface de métal liquide (13) et le niveau de surface de laitier (14) dans le creuset (1).

**2.** Procédé selon la revendication 1, **caractérisé en ce que** l'équation générale gouvernant la déformation circonférentielle continue de la paroi externe est, dans le cas d'un haut-fourneau :

$$y = y_0 F_1 + \frac{\Psi}{2\lambda} F_2 + LT \qquad (1)$$

où $F_1$ et $F_2$ sont des constantes pour un haut-fourneau donné à chaque hauteur de mesure :

$$F_1 = \cosh(\lambda x) \cos(\lambda x) \qquad (2)$$

$$F_2 = \cosh(\lambda x) \sin(\lambda x) + \sinh(\lambda x) \cos(\lambda x) \qquad (3)$$

et

$$\lambda = \left[ \frac{3(1-\nu^2)}{R^2 t^2} \right]^{1/4} \qquad (4)$$

où y est la déflexion (ou le déplacement) horizontale mesurée et corrigée en fonction de la température mesurée, x est la position verticale, R est le rayon moyen à chaque hauteur, t est l'épaisseur de paroi à chaque hauteur et $\nu$ est le coefficient de Poisson ;
les autres termes dépendant de la pression appliquée sur la paroi du four à cuve :

- $\gamma_0$ est la déflexion ou le déplacement au niveau des tuyères ;
- $\psi$ est l'angle de la paroi déformée au niveau des tuyères ;
- LT est le terme de charge qui est proportionnel à la force appliquée sur la structure ;

une transformation finale sur les pressions P étant réalisée pour prendre en compte le fait que le creuset du haut-fourneau est construit avec des matériaux de propriétés mécaniques différentes, réfractaire et enveloppe d'acier, et avec des épaisseurs différentes en fonction de la hauteur ($E_x$ = module de Young du matériau x) :

$$P_{sur\ enveloppe\ acier} =$$

$$P_{int.sur\ réfractaire}\ \frac{E_{acier} Epaisseur_{Env.acier}}{E_{acier} Epaisseur_{Env.acier} + E_{réfract.} Epaisseur_{réfract.}} \quad (5) \quad ;$$

la relation entre la pression statique P et le niveau de métal liquide ou de laitier h étant donnée par une relation du type P=p.g.h, où $\rho$ est la densité moyenne métal liquide/laitier et g l'accélération de la pesanteur.

**3.** Procédé selon la revendication 1, **caractérisé en ce que** les mesures de déformation circonférentielle et de température sont effectuées en continu et/ou en temps réel.

**4.** Paroi externe (2) du creuset d'un four à cuve métallurgique, comportant un blindage en acier (4) ainsi qu'un trou de coulée, le blindage (4) étant muni d'un dispositif de mesure du niveau de surface de métal liquide (13) et du niveau de surface de laitier (14) dans le creuset (1) du four, pour la mise en oeuvre d'un procédé de mesure du niveau de surface de métal liquide (13) et du niveau de surface de laitier (14) dans ledit creuset, **caractérisée en ce que** ledit dispositif de mesure comporte plusieurs capteurs à jauges de déformation (6) et un ou plusieurs capteurs thermiques (7), fixés sur la face externe dudit blindage (4), **en ce que** les capteurs (6, 7) sont montés alignés dans un plan vertical, de part et d'autre du trou de coulée et **en ce que** les deux types de capteurs sont alternés dans le plan vertical, de sorte que les capteurs à jauges de déformation (6) soient aptes à mesurer une première variable, la déformation circonférentielle de ladite paroi externe (2), en plusieurs points de celles-ci et que les capteurs thermiques soient aptes à mesurer une seconde variable, la température de ladite paroi externe (2), en un ou plusieurs points de celle-ci, pour pouvoir introduire lesdites première et seconde variables mesurées en plusieurs points de la paroi externe du creuset dans l'équation générale gouvernant la déformation circonférentielle continue dont la solution est analytique, qui admet deux inconnues, le niveau de métal liquide et le niveau global métal liquide-laitier, compte tenu des paramètres fixes suivants : la géométrie du four à cuve, des paramètres représentatifs de la nature des matériaux constitutifs du four à cuve, l'épaisseur de la paroi externe du four à cuve en chaque point de mesure, la densité du métal liquide et du laitier et pour finalement résoudre ladite équation générale et obtenir une valeur du niveau de surface de métal liquide (13) et du niveau de surface de laitier (14) dans le creuset (1).

5. Paroi selon la revendication 4, **caractérisée en ce que** les jauges de déformation (10) sont soudées à même ledit blindage (4) et **en ce que** le capteur à jauges de déformation (6) comporte un capot de protection (11) fixé mécaniquement sur le blindage (4) dont l'étanchéité par rapport au blindage est assurée au moyen d'un joint élastique.

6. Paroi selon la revendication 4, **caractérisée en ce que** le capteur à jauges de déformation (6) comporte quatre jauges de déformation (10).

7. Paroi selon la revendication 6, **caractérisée en ce que** deux des jauges (10) sont soudées complètement au blindage et deux jauges ne sont pas soudées complètement au blindage, ces deux dernières jauges permettant une correction de température suite à la dilatation d'une extrémité libre.

8. Paroi selon la revendication 4, **caractérisée en ce que** chaque capteur thermique (7) est un thermomètre à résistance de platine.

9. Paroi selon la revendication 4, **caractérisée en ce que** le dispositif de mesure est disposé entre les canaux (9) d'un circuit de refroidissement à canaux monté sur ou dans la paroi.

10. Haut-fourneau comprenant un creuset muni d'une paroi externe (2), ladite paroi externe comportant un blindage (4) muni d'un dispositif de mesure du niveau de surface de fonte (13) et du niveau de surface de laitier (14) dans le creuset (1), selon l'une quelconque des revendications 4 à 9.


**Patentansprüche**

1. Verfahren zum Messen des Oberflächenniveaus des flüssigen Metalls (13) und des Oberflächenniveaus der Schlacke (14) in der Schmelzwanne (1) eines metallurgischen Schachtofens mit einer Außenwand (2), ausgestattet mit einer Stahlabschirmung (4), sowie einem Stichloch, wobei die Abschirmung (4) der Außenwand eine Feuerfestdicke (3) im Kontakt mit dem flüssigen Metall umgibt, wobei die Abschirmung (4) auf ihrer Außenseite mit mehreren Sensoren mit Verformungsfühlern (6) und einem oder mehreren thermischen Sensoren (7) ausgestattet ist, wobei die Sensoren (6, 7) in einer vertikalen Ebene ausgerichtet auf der einen und der anderen Seite des Stichlochs und derart montiert sind, dass sich die beiden Sensorentypen in dieser vertikalen Ebene abwechseln, wobei das Verfahren die folgenden Schritte umfasst:

- Messen, an mehreren Punkten der Außenwand (2) der Schmelzwanne, der folgenden Variablen:

  - der Umfangsverformung der Außenwand (2) mit Hilfe der Sensoren mit Verformungsfühlern (6), die auf der Abschirmung (4) befestigt sind,
  - der Temperatur der Außenwand (2) mit Hilfe der thermischen Sensoren (7), die auf der Abschirmung (4) befestigt sind,
  - optional, Messen des ringförmigen Drucks oder statischen Drucks des warmen Windes im Ofen,

- Eingeben der an mehreren Punkten der Außenwand der Schmelzwanne gemessenen Variablen in die allgemeine Gleichung, welche die kontinuierliche Umfangsverformung bestimmt, deren Lösung analytisch ist, die zwei Unbekannte zulässt, das Niveau des flüssigen Metalls und das allgemeine Niveau flüssiges Metall-Schlacke, unter Berücksichtigung der folgenden festen Parameter: Geometrie des Schachtofens, Parameter, die für die Art der Materialien, aus denen der Schachtofen besteht, repräsentativ sind, Dicke der Außenwand des Schachtofens an jedem Messpunkt, Dichte des flüssigen Metalls und der Schlacke und
- Lösen der Gleichung und Erhalten des Oberflächenniveaus des flüssigen Metalls (13) und des Oberflächenniveaus der Schlacke (14) in der Schmelzwanne (1).

2. Verfahren nach Anspruch 1, **dadurch gekennzeichnet, dass** die allgemeine Gleichung, welche die kontinuierliche Umfangsverformung der Außenwand bestimmt, im Fall eines Hochofens ist:

$$y = y_0 F_1 + \frac{\Psi}{2\lambda} F_2 + LT \qquad (1)$$

wobei $F_1$ und $F_2$ Konstanten für einen bestimmten Hochofen in jeder Messhöhe sind:

$$F_1 = \cosh(\lambda x) \cos(\lambda x) \qquad (2)$$

$$F_2 = \cosh(\lambda x) \sin(\lambda x) + \sinh(\lambda x) \cos(\lambda x) \qquad (3)$$

und

$$\lambda = \left[ \frac{3(1-\nu^2)}{R^2 t^2} \right]^{1/4} \qquad (4)$$

wobei y die gemessene und in Abhängigkeit von der gemessenen Temperatur horizontale Ablenkung (oder die Verlagerung) ist, x die vertikale Position ist, R der durchschnittliche Radius jeder Höhe ist, t die Wanddicke in jeder Höhe ist und $\nu$ der Poisson-Koeffizient ist,
wobei die anderen Ausdrücke von dem auf die Wand des Schachtofens angewendeten Druck abhängen:

    - yo ist die Ablenkung oder die Verlagerung im Bereich der Düsen,
    - $\psi$ ist der Winkel der im Bereich der Düsen verformten Wand,
    - LT ist der Lastausdruck, der zu der auf die Struktur ausgeübten Kraft proportional ist,

wobei eine abschließende Transformation auf die Drücke P durchgeführt wird, um den Fakt zu berücksichtigen, dass der Hochofen mit Materialien mit unterschiedlichen mechanischen Eigenschaften, Feuerfeststoffen und Stahlhülle und mit unterschiedlichen Dicken in Abhängigkeit von der Höhe ($E_x$ = Young-Modul des Materials x) konstruiert ist:

$$P_{auf\,Stahlhülle} = P_{int.auf\,Feuerfeststoff} \frac{E\,Stahldicke\,Stahlhülle}{E_{Stahldicke\,Stahlhülle} + E_{Feuerfeststoff\,Dicke\,Feuerfeststoff}} \qquad (5)\;\;;$$

wobei das Verhältnis zwischen dem statischen Druck P und dem Niveau des flüssigen Metalls oder der Schlacke h von einer Gleichung des Typs P=p.g.h gegeben ist, wobei p die mittlere Dichte flüssiges Metall/Schlacke ist und g die Beschleunigung der Schwere ist.

3.  Verfahren nach Anspruch 1, **dadurch gekennzeichnet, dass** die Messungen der Umfangsverformung und der Temperatur kontinuierlich und/oder in Echtzeit durchgeführt werden.

4.  Außenwand (2) der Schmelzwanne eines metallurgischen Schachtofens, umfassend eine Abschirmung aus Stahl (4) sowie ein Stichloch, wobei die Abschirmung (4) mit einer Messvorrichtung des Oberflächenniveaus des flüssigen Metalls (13) und des Oberflächenniveaus der Schlacke (14) in der Schmelzwanne (1) des Ofens ausgestattet ist, für die Umsetzung eines Messverfahrens des Oberflächenniveaus des flüssigen Metalls (13) und des Oberflächenniveaus der Schlacke (14) in der Schmelzwanne, **dadurch gekennzeichnet, dass** die Messvorrichtung mehrere Sensoren mit Verformungsfühlern (6) und einen oder mehrere thermische Sensoren (7) aufweist, die auf der Außenseite der Abschirmung (4) befestigt sind, und dass die Sensoren (6, 7) in einer vertikalen Ebene ausgerichtet auf der einen und der anderen Seite des Stichlochs und derart montiert sind, dass sich die beiden Sensorentypen in dieser vertikalen Ebene abwechseln, so dass die Sensoren mit Verformungsfühlern (6) imstande sind, eine erste Variable, die Umfangsverformung der Außenwand (2), an mehreren Punkten derselben zu messen und dass die thermischen Sensoren imstande sind, eine zweite Variable, die Temperatur der Außenwand (2), an einem oder mehreren Punkten derselben zu messen, um die erste und zweite, an mehreren Punkten der Außenwand der Schmelzwanne gemessene Variable in die allgemeine Gleichung einzusetzen, welche die kontinuierliche Umfangsverformung bestimmt, deren Lösung analytisch ist, die zwei Unbekannte zulässt, das Niveau des flüssigen Metalls und das allgemeine Niveau flüssiges Metall-Schlacke, unter Berücksichtigung der folgenden festen Parameter: Geometrie des Schachtofens, Parameter, die für die Art der Materialien, aus denen der Schachtofen besteht, repräsentativ sind, Dicke der Außenwand des Schachtofens an jedem Messpunkt, Dichte des flüssigen Metalls und der Schlacke und um schließlich die allgemeine Gleichung zu lösen und einen Wert des Oberflächenniveaus des flüssigen Metalls (13) und des Oberflächenniveaus der Schlacke (14) in der Schmelzwanne (1) zu erhalten.

5. Wand nach Anspruch 4, **dadurch gekennzeichnet, dass** die Verformungsfühler (10) direkt mit der Abschirmung (4) verschweißt sind und dass der Sensor mit Verformungsfühlern (6) eine Schutzabdeckung (11) aufweist, die mechanisch auf der Abschirmung (4) befestigt ist, deren Dichtigkeit in Bezug zur Abschirmung von einer elastischen Dichtung sichergestellt wird.

6. Wand nach Anspruch 4, **dadurch gekennzeichnet, dass** der Sensor mit Verformungsfühlern (6) vier Verformungsfühler (10) aufweist.

7. Wand nach Anspruch 6, **dadurch gekennzeichnet, dass** zwei der Fühler (10) vollständig mit der Abschirmung verschweißt sind und zwei der Fühler nicht vollständig mit der Abschirmung verschweißt sind, wobei die zwei letztgenannten Fühler eine Temperaturkorrektur infolge einer Ausdehnung eines freien Endes erlauben.

8. Wand nach Anspruch 4, **dadurch gekennzeichnet, dass** jeder thermische Sensor (7) ein Thermometer mit Platinwiderstand ist.

9. Wand nach Anspruch 4, **dadurch gekennzeichnet, dass** die Messvorrichtung zwischen den Kanälen (9) eines Kanalkühlkreises angeordnet ist, der auf oder in der Wand montiert ist.

10. Hochofen, umfassend eine Schmelzwanne mit einer Außenwand (2), wobei die Außenwand eine mit einer Messvorrichtung des Oberflächenniveaus des Gusseisens (13) und des Oberflächenniveaus der Schlacke (14) in der Schmelzwanne (1) ausgestattete Abschirmung (4) aufweist, nach einem der Ansprüche 4 bis 9.

**Claims**

1. A method for measuring the surface level of liquid metal (13) and the surface level of slag (14) in the crucible (1) of a metallurgical shaft furnace having an external wall (2) provided with a shielding made of steel (4), as well as a tap hole, the shielding (4) of the external wall surrounding a refractory thickness (3) in contact with the liquid metal, the shielding (4) being provided on its external surface with a plurality of strain gauge sensors (6) and with one or more thermal sensors (7), said sensors (6,7) being mounted so as to be aligned in a vertical plane, on either sides of the tap hole and such that the two types of sensors are alternated in this vertical plane, said method comprising the following steps of:

- measuring the following variables at a number of points of the external wall (2) of the crucible:

- the circumferential strain of said external wall (2) by means of the strain gauge sensors (6) attached onto said shielding (4);
- the temperature of said external wall (2) by means of thermal sensors (7) attached onto said shielding (4);

- optionally measuring the circular pressure or static pressure of the hot blast in the furnace;
- introducing said variables measured at a number of points of the external wall of the crucible in the general equation governing the continuous circumferential strain the solution of which is analytical, and which contains two unknown values, the level of liquid metal and the overall level of liquid metal-slag, taking into consideration the following established parameters: the geometry of the shaft furnace, the parameters representative of the nature of the constituent materials of the shaft furnace, the thickness of the external wall of the shaft furnace at each point of measurement, the density of the liquid metal and of the slag; and
- solving said equation and obtaining the surface level of liquid metal (13) and the surface level of slag (14) in the crucible (1).

2. A method according to Claim 1, **characterised in that** the general equation governing the continuous circumferential strain of the external wall is, in the case of a blast furnace:

$$y = y_0 F_1 + \frac{\Psi}{2\lambda} F_2 + LT \qquad (1)$$

where $F_1$ and $F_2$ are constants for a given blast furnace at each measurement height:

$$F_1 = \cosh(\lambda x) \cos(\lambda x) \qquad (2)$$

$$F_2 = \cosh(\lambda x) \sin(\lambda x) + \sinh(\lambda x) \cos(\lambda x) \qquad (3)$$

and

$$\lambda = \left[ \frac{3(1-\nu^2)}{R^2 t^2} \right]^{1/4} \qquad (4)$$

where y is the horizontal deflection (or the displacement) measured and corrected as a function of the temperature measured, x is the vertical position, R is the mean radius at each height, t is the thickness of the wall at each height and $\nu$ is Poisson's ratio;
the other terms depending on the pressure applied to the wall of the shaft furnace:

- $\gamma_0$ is the deflection or displacement at the level of the nozzles;
- $\psi$ is the angle of the strained wall at the level of the nozzles;
- LT is the load term which is proportional to the force applied over the structure;

a final transformation being performed over the pressures P in order to take into account the fact that the crucible of the blast furnace is constructed with materials having different mechanical properties, refractory material and steel shell, and with various thicknesses differing as a function of the height ($E_x$ = Young's modulus of the material x) :

$$P_{across\ steel\ shell} =$$

$$P_{int.across\ refractory} \frac{E_{steel} Thickness_{Steel\ shell}}{E_{steel} Thickness_{Steel\ shell} + E_{refract.} Thickness_{refract.}} \qquad (5) \ ;$$

with the relationship between the static pressure P and the level of liquid metal or slag h being given by a relation of the type P=p.g.h, where $\rho$ is the average density of liquid metal/slag and g is the acceleration due to gravity.

3. A method according to Claim 1, **characterised in that** the measurements of circumferential strain and temperature are carried out continuously and/or in real time.

4. An external wall (2) of the crucible of a metallurgical shaft furnace, comprising a steel shielding (4) as well as a tap hole, the shielding (4) being provided with a device for measuring the surface level of liquid metal (13) and the surface level of slag (14) in the crucible (1) of the furnace, for the implementation of a method for measuring the surface level of liquid metal (13) and the surface level of slag (14) in said crucible, **characterised in that** said measuring device comprises a plurality of strain gauge sensors (6) and one or more thermal sensors (7) attached onto the external surface of said shielding (4), **in that** the sensors (6,7) are mounted so as to be aligned in a vertical plane, on either sides of the tap hole, and **in that** the two types of sensors are alternated in the vertical plane, in such a manner that the strain gauge sensors (6) can measure a first variable, the circumferential strain of said external wall (2), at a number of points of the latter, and that the thermal sensors can measure a second variable, the temperature of said external wall (2), at one or more points of the latter, so as to be able to introduce said first and second variables measured at a number of points of the external wall of the crucible in the general equation governing the continuous circumferential strain the solution of which is analytical, and which contains two unknown values, the level of liquid metal and the overall level of liquid metal-slag, taking into consideration the following established parameters: the geometry of the shaft furnace, the parameters representative of the nature of the constituent materials of the shaft furnace, the thickness of the external wall of the shaft furnace at each point of measurement, the density of liquid metal and of slag; and to finally solve said general equation and obtain a value for the surface level of liquid metal (13) and the surface level of slag (14) in the crucible (1).

5. A wall according to Claim 4, **characterised in that** the strain gauges (10) are welded to said shielding (4) itself and **in that** the strain gauge sensor (6) comprises a protective cover (11) attached mechanically onto the shielding (4) the sealing of which with respect to the shielding is ensured by means of a resilient sealing gasket.

6. A wall according to Claim 4, **characterised in that** the strain gauge sensor (6) comprises four strain gauges (10).

7. A wall according to Claim 6, **characterised in that** two of the gauges (10) are completely welded onto the shielding and two gauges are not completely welded onto the shielding, these latter two gauges allowing for a correction of temperature subsequent to the expansion of a free end.

8. A wall according to Claim 4, **characterised in that** each thermal sensor (7) is a platinum-resistance thermometer.

9. A wall according to Claim 4, **characterised in that** the measuring device is arranged between the channels (9) of a channel-based cooling circuit mounted onto or in the wall.

10. A blast furnace comprising a crucible provided with an external wall (2), said external wall comprising a shielding (4) provided with a device for measuring the surface level of cast iron (13) and the surface level of slag (14) in the crucible (1), according to any one of Claims 4 to 9.

FIG. 1

FIG. 2

FIG. 3

FIG. 4

FIG. 5

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4413810 A
- JP 11281467 B
- JP 2003344142 A
- JP 6271916 A
- WO 2011038875 A
- JP 60110821 B
- JP 54130958 A
- US 20020134794 A
- EP 2422900 A